Europäisches Patentamt

European Patent Office

Office européen des brevets

(19)

(11) **EP 0 621 156 B1**

(12) **EUROPÄISCHE PATENTSCHRIFT**

(45) Veröffentlichungstag und Bekanntmachung des Hinweises auf die Patenterteilung:
**18.06.1997 Patentblatt 1997/25**

(51) Int. Cl.$^6$: **B60L 3/10**

(21) Anmeldenummer: **94105846.3**

(22) Anmeldetag: **15.04.1994**

(54) **Verfahren zur Steuerung und Regelung eines elektrischen Antriebes eines Fahrzeugs**

Method for controlling an electric driven vehicle

Méthode pour la commande et la régulation de l'entraînement électrique d'un véhicule

(84) Benannte Vertragsstaaten:
**DE FR GB**

(30) Priorität: **21.04.1993 DE 4312949**

(43) Veröffentlichungstag der Anmeldung:
**26.10.1994 Patentblatt 1994/43**

(73) Patentinhaber: **ABB RESEARCH LTD.**
**8050 Zürich (CH)**

(72) Erfinder:
• **Schreiber, Rolf**
**D-68199 Mannheim (DE)**

• **Kögel, Rüdiger**
**D-76689 Karlsdorf-Neuthard (DE)**
• **Hildenbrand, Peter, Prof.**
**D-77871 Renchen (DE)**

(74) Vertreter: **Rupprecht, Klaus, Dipl.-Ing.**
**c/o ABB Patent GmbH,**
**Postfach 10 03 51**
**68128 Mannheim (DE)**

(56) Entgegenhaltungen:
**EP-A- 0 195 249      US-A- 4 944 539**

## Beschreibung

Die Erfindung bezieht sich auf ein Verfahren zur Steuerung und Regelung eines elektrischen Antriebes eines Fahrzeugs unter Hochausnutzung des Kraftschlusses zwischen Rad und Schiene oder Fahrbahn. Solche Verfahren werden insbesondere bei Schienenfahrzeugen verwendet, können aber grundsätzlich auch bei Straßenfahrzeugen Anwendung finden.

Schon seit längerer Zeit wird angestrebt, mit Hilfe von Schleuderschutzeinrichtungen, nicht nur Schleuder- und Gleitzustände zu vermeiden, sondern auch einen Fahr-/Bremsbetrieb im stabilen Bereich kurz vor dem Kraftschlußmaximum zu ermöglichen. Die Schwierigkeit, den angestrebten Betriebsbereich zu erreichen, besteht darin, daß der Kraftschluß, der von einer Reihe von Einflüssen abhängt und auch während des Fahrbetriebs variabel ist, nicht direkt meßbar ist. Das bedeutet, daß die jeweils gültige Kraftschlußkennlinie, die den Zusammenhang zwischen Kraftschlußbeiwert und Schlupfgeschwindigkeit angibt, nicht bekannt ist.

Diese Problematik sowie eine Erläuterung der in diesem Zusammenhang verwendeten Fachbegriffe und auch Möglichkeiten indirekt auf den jeweils erreichten Betriebspunkt zu schließen, sind in AET (38)-1983, Seite 45 bis 56 dargelegt. Die dort beschriebene Schlupfregelung setzt allerdings eine exakte Messung der Fahrzeug-Istgeschwindigkeit voraus und kann außerdem keinen optimalen Betrieb gewährleisten, weil das maximale Moment nicht bei einem konstanten Schlupfwert übertragbar ist. Das Maximum des Kraftschlußbeiwerts liegt z.B. bei trockener Schiene bei einer anderen Schlupfgeschwindigkeit als bei nasser Schiene.

Der EP-B1-01 95 249 ist ein Verfahren zur Feststellung von Schleuder- und Gleitzuständen bei Fahrzeugen zu entnehmen, das ohne Messung der Fahrzeuggeschwindigkeit arbeitet. Bei diesem Verfahren wird dem Führungssollwert für einen elektrischen Fahrzeugantrieb ein Identifikationssignal überlagert, wodurch dem von einem Motor erzeugten Betriebsdrehmoment ein Wechselmoment überlagert wird. An einer geeigneten Stelle des mechanischen Antriebssystems, z.B. an der Motorwelle oder am Antriebsrad wird die Reaktion des mechanischen Systems auf diese Anregung, z.B. mit einem Tachogenerator erfaßt. Vom Tachogenerator wird eine Wechselspannung abgegeben, aus der durch Filterung ein Meßsignal gewonnen wird, das mit dem in das Antriebssystem eingespeisten Identifikationssignal verglichen wird, z.B. mit Hilfe einer Korrelationsrechnung. Durch Auswertung des Ergebnisses der Korrelationsrechnung kann festgestellt werden, ob ein Schleuder- oder Gleitzustand vorliegt.

Der Erfindung liegt die Aufgabe zugrunde, ein Verfahren zur Steuerung und Regelung eines elektrischen Antriebs eines Fahrzeugs anzugeben, das eine gute, im Vergleich zu bekannten Verfahren bessere Ausnutzung des Kraftschlusses ermöglicht.

Verfahren zur Steuerung und Regelung eines elektrischen Antriebs eines Fahrzeugs, insbesondere eines Schienenfahrzeugs unter Hochausnutzung des Kraftschlusses zwischen Rad und Schiene oder Fahrbahn, unter Begrenzung eines vom Fahrzeugführer vorgegebenen Momentensollwertes auf einen Wert, der einen Fahr. bzw. Bremsbetrieb nahe am momentanen Kraftschlußmaximum zwischen Antriebsrad des Fahrzeugs und Untergrund ermöglicht, wobei

a) die Steigung der jeweils gültigen Kraftschlußkennlinie, also des Kraftschlußbeiwerts als Funktion der Schlupfgeschwindigkeit ermittelt wird,
b) die Differenz der ermittelten Steigung der Kraftschlußkennlinie zu einem vorgegebenen Steigungssollwert gebildet wird,
c) die gebildete Differenz der Steigungswerte in einen Reduktionsfaktor umgesetzt wird, und
d) durch Multiplikation des Reduktionsfaktors mit dem vorgegebenen Momentensollwert diesen auf einen Eingangs-Momentensollwert begrenzt, der dem elektrischen Antrieb zugeführt wird, und wobei
e) die Steigung der Kraftschlußkennlinie und die Umsetzung der Steigungswerte-Differenz in den Reduktionsfaktor unter Verwendung einer meßtechnisch erfaßbaren Ersatzgröße erfolgt, deren physikalischer Zusammenhang mit der Steigung der Kraftschlußkennlinie zuvor ermittelt wurde.

Das Verfahren hat den Vorteil, daß ein als optimal erachteter Betriebspunkt, der kurz vor dem Kraftschlußmaximum liegt, als Steigungssollwert vorgebbar ist und daß sich automatisch die jeweilige Optimal-Schlupfgeschwindigkeit bzw. der Optimal-Schlupf, das ist sie relative, auf die Fahrzeuggeschwindigkeit bezogene Schlupfgeschwindigkeit, einstellt. Das Verfahren bzw. eine danach arbeitende Anordnung wirkt somit als Schlupfregelung mit adaptiertem So wert.

Vorteilhafte Ausgestaltungen des Verfahrens sind in abhängigen Ansprüchen angegeben und in unten stehenden Teilen der Beschreibung erläutert.

Die Erfindung geht von der Überlegung aus, daß eine deutliche Verbesserung der Antriebsregelung unter dem Aspekt der Kraftschlußhochausnutzung möglich ist, wenn eine Information über die Steigung der Kraftschlußkennlinie vorliegt. Die Steigung der Kraftschlußkennlinie ist jedoch ebensowenig wie die Kennlinie selbst direkt meßtechnisch erfaßbar.

Erfindungsgemäß wird daher mit einer Ersatzgröße gearbeitet, die durch Auswertung eines gemessenen Signals gebildet wird und die eine Information über die Steigung der Kraftschlußkennlinie enthält. Es wird also mit einer Ersatzgröße gearbeitet, deren Zusammenhang mit der Steigung der Kraftschlußkennlinie bekannt ist. Da dieser Zusammenhang bekannt ist, kann eine Umsetzung der Ersatzgröße in einen Steigungswert entfallen, d.h. die Ersatzgröße kann direkt zur Regelung des Antriebs genutzt werden.

Zur Gewinnung der Ersatzgröße kann vorteilhaft das aus der EP-B1 01 95 249 bekannte und oben bereits beschriebene Verfahren benutzt werden. Das Verfahren arbeitet mit einem Testsignal, das auch als Identifikationssignal bezeichnet wird. Durch Vergleich des am Eingang des elektrischen Antriebs eingegebenen Testsignals mit einem am mechanischen Ausgang, d.h. an der Motorwelle oder Radwelle meßtechnisch erfaßten Testsignal wird eine Phasenverschiebung zwischen diesen Testsignalen ermittelt, die als Ersatzgröße genutzt wird. Anstelle oder zusätzlich zur Phasenänderung kann auch eine Betragsänderung der Signale ausgewertet werden.

Das in EP-B1 01 95 249 beschriebene Verfahren nutzt zwar auch die Phasenänderung zwischen Eingangs- und Ausgangs-Testsignal zur Beurteilung von Schleuderzuständen. Die vorliegende Erfindung bildet das Verfahren jedoch insofern wesentlich weiter, als die ermittelte Phasenänderung genutzt wird als Information über die Steigung der Kraftschlußkennlinie und somit indirekt zur Feststellung, an welchem Betriebspunkt der Kraftschlußkennlinie gerade gearbeitet wird. Da auf diese Weise der aktuelle Betriebspunkt bekannt ist, ist der Abstand von einem vorgegebenen optimalen Betriebspunkt feststellbar und es kann ein Reduktionssignal gebildet werden, mit dessen Hilfe ein betrieblich, z.B. von einem Lokführer vorgegebenes Sollwert so begrenzt werden kann, daß sich ein Betriebspunkt im Bereich des optimalen Betriebspunktes, also des Optimal-Schlupfes einstellt.

Das vorstehend in Kurzform beschriebene Verfahren wird im folgenden näher erläutert, wobei auf einen elektrischen Antrieb eines Schienenfahrzeugs Bezug genommen wird.

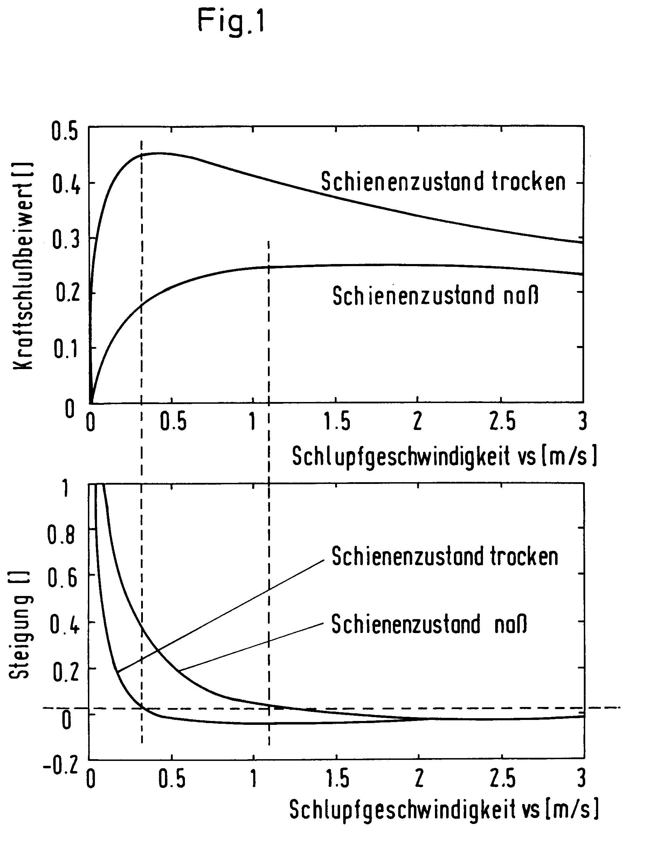

In Figur 1 sind im oberen Teil beispielhaft Kraftschlußkennlinien (Kraftschlußbeiwert in Abhängigkeit der Schlupfgeschwindigkeit $v_S$) für einen trockenen und einen nassen Schienenzustand dargestellt. Man erkennt, daß das Maximum des Kraftschlußbeiwerts je nach Schienenzustand bei unterschiedlichen Schlupfgeschwindigkeiten liegt. Im unteren Teil ist die Steigung der im oberen Teil gezeigten Kennlinien dargestellt. Mit gestrichelten Linien ist ein günstiger Arbeitspunkt markiert, der als optimaler Arbeitspunkt vorgegeben werden kann. Wie die beiden senkrechten gestrichelten Linien zeigen, liegt dieser Arbeitspunkt jeweils, also sowohl bei trockenem als auch nassem Schienenzustand, im steigenden Teil der Kraftschlußkennlinie kurz vor Erreichen des Maximums. Die horizontale gestrichelte Linie markiert den zugehörigen Steigungswert, der beispielsweise bei 0,01 oder 0,02 liegt. Wesentlich ist, daß für beide Kennlinien der gleiche Steigungswert gilt, so daß durch die Wahl eines Steigungswerts ein für alle Schienenzustände optimaler Betriebspunkt gewählt ist.

Da die Steigung der Kraftschlußkennlinie meßtechnisch nicht erfaßbar ist, wird eine Ersatzgröße benutzt, deren Zusammenhang mit der Steigung der Kraftschlußkennlinie bekannt ist, nämlich vorzugsweise die Phasenverschiebung $\Phi$ zwischen einem eingangsseitig dem elektrischen Antrieb durch Überlagerung mit dem Sollmoment eingegebenen Testsignal T und einem ausgangsseitigen Testsignal $T_A$, das aus einem am mechanischen Ausgang, z.B. an der Motorwelle abgegriffenen Winkelgeschwindigkeits-Meßwert w gefiltert wird. Anstelle der Winkelgeschwindigkeit kann auch die Winkelbeschleunigung gemessen werden.

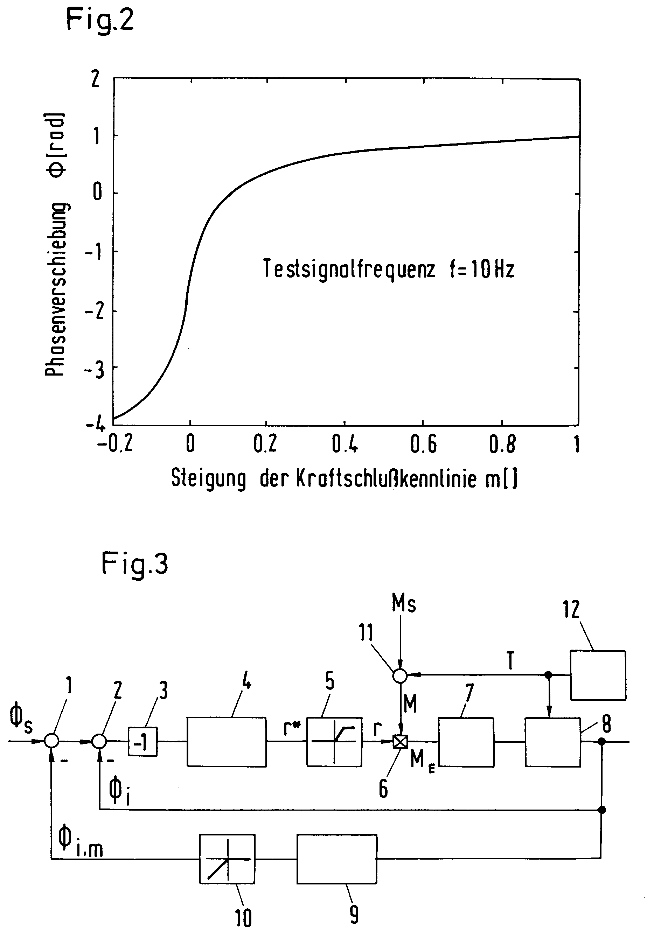

Der Zusammenhang zwischen der Steigung der Kraftschlußkennlinie und dieser Phasenverschiebung läßt sich wie folgt erläutern. Motor-Rad-Schiene-Systeme haben ein nichtlineares Verhalten aufgrund der Kraftschlußkennlinie für den Rad-Schiene-Kontakt. Durch Linearisierung dieses nichtlinearen Verhaltens erhält man ein lineares System mit einem beliebigen Betriebspunkt auf der Kraftschlußkennlinie. Einen wesentlichen Betriebspunkt-Parameter stellt dabei die Steigung der Kraftschlußkennlinie dar. Für jede Steigung läßt sich der Frequenzgang der momentenabhängigen Winkelgeschwindigkeit bestimmen. Der Frequenzgang des nichtlinearen Motor-Rad-Schiene-Systems stellt somit eine Kurvenschar von Betrags- und Phasenverläufen in Abhängigkeit des Betriebspunkt-Parameters "Steigung der Kraftschlußkennlinie" dar. Die Frequenzkennlinien zeigen dabei eine starke Abhängigkeit der Phase von der Steigung der Kraftschlußkennlinie. Für einen Frequenzpunkt der Phasenverschiebungskurven läßt sich eine Phasenverschiebungs-Steigungskennlinie bestimmen, die einen eineindeutigen Zusammenhang zwischen der Phasenverschiebung und der Steigung aufweist. Beispielhaft ist eine solche Kennlinie in Figur 2 für eine Testsignalfrequenz f = 10Hz dargestellt. Für eine bestimmte Frequenz der Phasenschiebungskennlinien eines nichtlinearen Motor-Rad-Schiene-Systems ist somit der gesuchte Zusammenhang zwischen der Steigung der Kraftschlußkennlinie und der Phasenverschiebung des Eingangsmoments und der Winkelgeschwindigkeit der Motorwelle eines Antriebssystems gefunden.

Ein geeignetes Verfahren zur meßtechnischen Bestimmung der Phasenverschiebung zwischen einem dem Momentensollwert überlagerten Testsignal und der daraus resultierenden Winkelgeschwindigkeit der Motorwelle ist oben bereits prinzipiell und in der EP-B1 01 95 249 detailliert beschrieben.

Bezüglich der Anwendung des bekannten Verfahrens zur Ermittlung der Phasenverschiebung im Rahmen des vorliegenden Verfahrens ist auf zwei Abweichungen hinzuweisen:

a) Die Wahl der Frequenz des Test- oder Identifikationssignals erfolgt gemäß EP-B1 01 95 249 vorzugsweise so, daß sie mit einer Resonanzfrequenz des mechanischen Antriebs übereinstimmt. Dieser Gesichtspunkt ist hier ohne Bedeutung. Es wird als geeignete Frequenz eine solche gewählt, bei der ein eineindeutiger Zusammenhang der Phasenänderung der Steigung der Kraftschlußkennlinie besteht.

b) Im Verfahren gemäß EP-B1 01 95 249 wird bevorzugt die Winkelbeschleunigung gemessen und ausgewertet, im erfindungsgemäßen Verfahren bevorzugt die Winkelgeschwindigkeit.

Die Bestimmung des Phasenverschiebungssignals kann prinzipiell sowohl mit einem kontinuierlichen oder diskreten Korrelationsverfahren, also in analoger Technik oder in Software-Realisierung durchgeführt werden.

In Figur 3 ist beispielhaft eine zur Durchführung des Verfahrens geeignete Regelungsstruktur dargestellt. Als Ersatzgröße für einen vorzugebenden Steigungswert wird ein Phasenverschiebungssollwert $\Phi_S$ vorgegeben.

Der Phasenverschiebungssollwert $\Phi_S$ soll einen Betriebspunkt kurz vor dem Kraftschlußmaximum im stabilen Bereich entsprechen. Dies wird erreicht, wenn der Phasenverschiebungssollwert $\Phi_S = -\frac{1}{2}\pi + \epsilon$ so gewählt wird, daß die Steigung der Kraftschlußkennlinie beispielsweise bei 0,01 liegt. Der Faktor $\epsilon$ beschreibt den Abstand zum Beginn des instabilen Betriebsbereich bei $\Phi = -\frac{1}{2}\pi$; ein geeigneter Abstandsfaktor kann z.B. bei $\epsilon = 0,5$ liegen.

In der Anordnung gemäß Figur 3 wird der Phasenverschiebungssollwert $\Phi_S$ einer ersten Additionsstelle 1 zugeführt, wo ein modifizierter Phasenverschiebungsistwert $\Phi_{i,m}$ subtrahiert wird. Vom resultierten Wert wird an einer zweiten Additionsstelle 2 ein Phasenverschiebungsistwert $\Phi_i$ subtrahiert. Der daraus resultierende Wert wird in einem Inverter 3 invertiert und anschließend einem Regler 4 zugeführt. Der Regler 4 liefert einen unbegrenzten Reduktionsfaktor r*, der im nachfolgenden Begrenzer 5 auf Werte im Bereich von 0 bis 1 begrenzt wird. Der so gebildete Reduktionsfaktor r wird an einer Multiplikationsstelle 6 mit einem Sollwert M verknüpft, so daß ein korrigierter Eingangs-Momentsollwert $M_E$ entsteht, der der Antriebseinrichtung 7 zugeführt wird. Der Sollwert M stellt eine Überlagerung eines z.B. vom Lokomotivführer vorgegebenen Momentensollwerts $M_S$ und eines als Testsignals T bezeichneten Wechselmoments dar. Am mechanischen Ausgang der Antriebseinrichtung 7 wird die Winkelgeschwindigkeit w erfaßt und einer Auswerteeinrichtung 8 zugeführt, die den Phasenverschiebungsistwert $\Phi_i$ liefert, der der zweiten Additionsstelle 2 zugeführt wird. Der Phasenverschiebungsistwert $\Phi_i$ ist außerdem auf einen Differenzierer 9 geführt, dessen Ausgangssignal in einem anschließenden einseitigen Begrenzer 10 begrenzt und als modifizierter Phasenverschiebungsistwert $\Phi_{i,m}$ auf die erste Additionsstelle 1 geführt ist.

Das Testsignal T wird in einem Testsignalgenerator 12 erzeugt und wird sowohl einer dritten Additionsstelle 11 zur Verknüpfung mit dem Momentensollwert $M_S$ zugeführt, als auch der Auswerteeinrichtung 8.

Als Regler 4 ist ein Regler mit integralem Verhalten geeignet, z.B. ein PI-Regler. Prinzipiell sind aber verschiedene aus der Regelungstechnik bekannte Regler bis hin zum Fuzzy Controller einsetzbar.

Um die auf dem Einschwingen der Korrelationsfilter der Auswerteeinrichtung 8 resultierende Reaktionszeit zu minimieren, können zusätzlich adaptive und/oder prädiktive Strukturen, z.B. auf Basis heuristischer Erkenntnisse (Fuzzy Logic/Fuzzy Control) oder deterministischer Methoden eingesetzt werden. Beispielsweise kann eine Prädiktion der Phasenverschiebung auf Basis von Vergangenheitswerten durchgeführt werden. Die vorgeschlagene Struktur kann autark arbeiten oder auch in bestehende Schleuder- und Gleitschutzeinrichtungen oder Drehzahl- oder Momentenregelungen integriert werden.

Es versteht sich, daß die Regelung, die vom Operateur in Form des Momentensollwerts $M_S$ vorgegebene Zug- oder Bremskraft nicht erhöhen darf. Dies wird durch den Begrenzer 5 sichergestellt, der den vom Regler 4 gelieferten, noch unbegrenzten Reduktionsfaktor r* auf Werte im Bereich 0 bis 1 begrenzt.

**Patentansprüche**

1. Verfahren zur Steuerung und Regelung eines elektrischen Antriebs eines Fahrzeugs, insbesondere eines Schienenfahrzeugs unter Hochausnutzung des Kraftschlusses zwischen Rad und Schiene oder Fahrbahn, unter Begrenzung eines vom Fahrzeugführer vorgegebenen Momentensollwertes ($M_S$) auf einen Wert, der einen Fahr. bzw. Bremsbetrieb nahe am momentanen Kraftschlußmaximum zwischen Antriebsrad des Fahrzeugs und Untergrund ermöglicht, <u>dadurch gekennzeichnet,</u> daß

   a) die Steigung der jeweils gültigen Kraftschlußkennlinie, also des Kraftschlußbeiwerts als Funktion der Schlupfgeschwindigkeit ($v_s$) ermittelt wird,
   b) die Differenz der ermittelten Steigung der Kraftschlußkennlinie zu einem vorgegebenen Steigungssollwert gebildet wird,
   c) die gebildete Differenz der Steigungswerte in einen Reduktionsfaktor (r) umgesetztwird, und
   d) durch Multiplikation des Reduktionsfaktors (r) mit dem vorgegebenen Momentensollwert ($M_S$) diesen auf einen Eingangs-Momentensollwert ($M_E$) begrenzt, der dem elektrischen Antrieb zugeführt wird, wobei
   e) die Steigung der Kraftschlußkennlinie und die Umsetzung der Steigungswerte-Differenz in den Reduktionsfaktor (r) unter Verwendung einer meßtechnisch erfaßbaren Ersatzgröße erfolgt, deren physikalischer Zusammenhang mit der Steigung der Kraftschlußkennlinie zuvor ermittelt wurde.

2. Verfahren nach Anspruch 1, dadurch gekennzeichnet, daß als Ersatzgröße ein Phasenverschiebungssignal ($\Phi$) verwendet wird, das wie folgt gebildet wird:

   a) ein vorzugsweise sinusförmiges Testsignal (T) wird dem Eingangs-Momentensollwert ($M_E$)

überlagert,

b) am mechanischen Ausgang, vorzugsweise an der Motorwelle des elektrischen Antriebs, wird die Winkelgeschwindigkeit oder die Winkelbeschleunigung gemessen;

c) aus dem so gewonnenen Meßsignal wird ein darin enthaltenes ausgangsseitiges Testsignal ($T_A$) gefiltert;

d) durch Vergleich der ein- und ausgangsseitigen Testsignale (T, $T_A$) wird deren Phasenverschiebung ($\Phi i$) ermittelt, die als Istwert ($\Phi i$) der Ersatzgröße ( $\Phi$ ) verwendet wird, wobei

e) ein Testsignal (T) verwendet wird, dessen eineindeutiger Zusammenhang zwischen Phasenverschiebung ($\Phi$) und Steigung der Kennlinie bei der gewählten Testsignalfrequenz bekannt ist.

3. Verfahren nach einem der vorstehenden Ansprüche, dadurch gekennzeichnet, daß zur Bildung des Reduktionssignals (r) eine Regeleinrichtung mit integralem Verhalten, insbesondere ein PI-Regler, verwendet wird.

4. Verfahren nach einem der vorstehenden Ansprüche, dadurch gekennzeichnet, daß mit Hilfe eines modifizierten Istwertes ($\Phi_{i,m}$) der Ersatzgröße der durch Differentiation des Istwertes ($\Phi_i$) mit anschließender einseitiger Begrenzung gebildet wird, eine Anhebung des Sollwertes ($\Phi_S$) der Ersatzgröße ($\Phi$) durchgeführt wird.

## Claims

1. Method for the open-loop and closed-loop control of an electric drive of a vehicle, in particular of a rail vehicle, with a high degree of utilization of the frictional engagement between the wheel and rail or underlying surface, with limitation of a desired torque value ($M_S$), prescribed by the driver of the vehicle, to a value which permits driving mode or braking mode near to the instantaneous maximum of frictional engagement between the drive wheel of the vehicle and the underlying surface, characterized in that

a) the positive gradient of the respectively valid frictional engagement characteristic curve, that is to say of the coefficient of friction, being determined as a function of the slip speed ($V_S$),

b) the difference between the determined positive gradient of the frictional engagement characteristic curve and a prescribed desired positive gradient value being formed,

c) the formed difference between the positive gradient values being converted into a reduction factor (r), and

d) the desired torque value ($M_S$) being limited to a desired input torque value ($M_E$) by multiplying the reduction factor (r) by the prescribed desired torque value ($M_S$), and the said desired input torque value ($M_E$) being fed to the electric drive, and

e) the positive gradient of the frictional engagement characteristic curve and the conversion of the difference between the positive gradient values into the reduction factor (r) taking place using an alternative variable which can be determined by measuring means and whose physical relationship with the positive gradient of the frictional engagement characteristic curve has previously been determined.

2. Method according to Claim 1, characterized in that a phase shift signal ($\Phi$) is used as alternative variable and is formed as follows:

a) a preferably sinusoidal test signal (T) is superimposed on the desired input torque value ($M_E$),

b) the angular speed or the angular acceleration is measured at the mechanical output, preferably at the engine shaft of the electric drive;

c) an output-side test signal ($T_A$) contained in the measurement signal acquired in this way is filtered out of it;

d) by comparing the input-side and output-side test signals (T, $T_A$), its phase shift ($\Phi i$) is determined and is used as the actual value ($\Phi i$) of the alternative variable ($\Phi$), and

e) a test signal (T) is used whose one-to-one relationship between the phase shift ($\Phi$) and positive gradient of the characteristic curve at the selected test signal frequency is known.

3. Method according to one of the preceding claims, characterized in that a closed-loop control device with integral behaviour, in particular a PI controller, is used to form the reduction signal (r).

4. Method according to one of the preceding claims, characterized in that a modified actual value ($\Phi_{i,m}$) of the alternative variable, which value ($\Phi_{i,m}$) is formed by differentiation of the actual value ($\Phi_i$) with subsequent single-ended limitation, is used to raise the desired value ($\Phi_S$) of the alternative variable ($\Phi$).

## Revendications

1. Procédé permettant de commander et de réguler une propulsion électrique, notamment d'un véhicule ferroviaire, en utilisant au mieux l'adhérence entre la roue et le rail ou la piste de roulement, en limitant le couple de consigne ($M_s$) prédéterminé par le conducteur à une valeur qui permet un fonctionnement en mode traction ou en mode freinage au voisinage de l'adhérence instantanée maximale entre le véhicule et le support, caractérisé par le fait que

a) l'on détermine la pente de la courbe caractéristique d'adhérence concernée, c'est-à-dire du coefficient d'adhérence en fonction de la vitesse de patinage ($v_s$),

b) l'on forme la différence entre la pente déterminée de la courbe caractéristique d'adhérence et une pente de consigne prédéterminée,

c) l'on convertit la différence des valeurs de pente en un coefficient de réduction (r),

d) par multiplication du coefficient de réduction (r) par le couple de consigne ($M_s$) prédéterminé, on limite celui-ci à une valeur de couple de consigne d'entrée ($M_E$) qui est transmise à la propulsion électrique,

e) la pente de la courbe caractéristique d'adhérence et la conversion de la différence des valeurs de pente en coefficient de réduction (r) étant opérées en utilisant une grandeur équivalente techniquement mesurable, dont la relation physique avec la pente de la courbe caractéristique d'adhérence a été préalablement déterminée.

2. Procédé selon la revendication 1, caractérisé par le fait que l'on utilise comme grandeur équivalente un signal ($\Phi$) de déphasage qui est formé de la manière suivante:

a) on superpose signal de test (T), de préférence sinusoïdal, au couple de consigne ($M_E$) d'entrée,

b) on mesure la vitesse angulaire ou l'accélération angulaire à la sortie mécanique, de préférence sur l'arbre du moteur de la propulsion électrique,

c) à partir du signal de mesure ainsi obtenu, on extrait par filtrage un signal de test ($T_A$) côté sortie contenu dans ledit signal de mesure,

d) par comparaison entre les signaux de test (T, $T_A$) côté entrée et côté sortie, on détermine leur déphasage que l'on utilise comme valeur réelle ($\Phi_i$) de la grandeur équivalente ($\Phi$),

e) on utilise un signal de test (T), pour lequel la relation univoque entre le déphasage ($\Phi$) et la pente de la courbe caractéristique pour la fréquence choisie de signal de test est connue.

3. Procédé selon l'une des revendications précédentes, caractérisé par le fait que pour former le signal de réduction (r), on utilise un dispositif de régulation à comportement intégral, notamment un régulateur PI.

4. Procédé selon l'une des revendications précédentes, caractérisé par le fait qu'à l'aide d'une valeur réelle ($\Phi_{i,m}$) modifiée de la grandeur équivalente, laquelle valeur est obtenue par différenciation de la valeur réelle ($\Phi_i$) suivie d'une limitation unilatérale, on relève la valeur de consigne ($\Phi_S$) de la grandeur équivalente ($\Phi$).

# Fig.1

## Fig.2

Phasenverschiebung Φ[rad] / Steigung der Kraftschlußkennlinie m[]

Testsignalfrequenz f=10 Hz

## Fig.3